# EUROPEAN PATENT SPECIFICATION

(11) **EP 1 332 436 B1**
(45) Date of publication and mention of the grant of the patent: **28.11.2007**
(21) Application number: 01981737.8
(22) Date of filing: 17.10.2001
(51) Int. Cl.: H04L 12/24, H04L 12/26

(54) **METHOD AND APPARATUS FOR SELECTIVELY DISPLAYING LAYERED NETWORK DIAGRAMS**
VERFAHREN UND VORRICHTUNG ZUM SELEKTIVEN ANZEIGEN GESCHICHTETER NETZWERKDIAGRAMME
PROCEDE ET APPAREIL D'AFFICHAGE SELECTIF DE DIAGRAMMES DE RESEAU EN COUCHES

(30) Priority: 17.10.2000 US 241052 P; 07.09.2001 US 949101
(43) Date of publication of application: 06.08.2003
(73) Proprietor: Computer Associates Think, Inc., Islandia, NJ 11788-7000 (US)
(72) Inventor: ANDERS, Vinberg, Plandome Manor, NY 11030 (US)
(74) Representative: Dunlop, Hugh Christopher
(86) International application number: PCT/US2001/032488
(87) International publication number: WO 2002/033871

(56) References cited:
- US-A- 5 295 244
- US-A- 5 535 403
- US-A- 5 768 501
- US-A- 5 958 012
- US-B1- 6 289 380

## Description

### Related Applications

This application claims priority to U.S. Provisional Serial Number 60/241,052 filed October 17, 2000. Further, this application claims priority from U.S. Serial Number 09/949,101 entitled "Network Management System Using Virtual Reality Techniques to Display and Simulate Navigation to Network Computers" filed September 7, 2001. This application is related to co-pending U.S. Serial Number 09/558,897 entitled "Method and Apparatus for Predictively and Graphically Administering a Networked Computer System in a Time Dimension" filed April 26, 2000, and U.S. Serial Number 09/559,237 entitled "Method and Apparatus for Maintaining Data Integrity Across Distributed Computer Systems " filed April 26, 2000. The concurrently filed U.S. Non-Provisional Application entitled "Method And. Apparatus For Displaying 3D State Indicators" is also related to the present application.

### Technical Field

The disclosed system is in the field of managing networked computer systems that are used in various aspects of a complex business organization that can be monitored by computer technology. More particularly, the disclosed system concerns a method and apparatus for network analysis by selectively displaying layered network diagrams to show the state of one or more links, connections or hardware/software relationships that may exist between components of a network.

### Background

Generally, network management systems illustrate the contents and topological structure of a networked system with a display using any one of several visualization techniques such as static 2-D network diagrams, dynamic tree diagrams, or 3-D views. These displays commonly use some type of icon or other symbol to represent the objects or nodes in the networked systems, and lines, pipes or other linear shapes to represent the network links or connections that interconnect the objects or nodes in the networked systems. Various techniques are used to indicate status, traffic volume, performance, or the like, of both the objects or nodes and the links.

Conventional network management systems lay out diagrams based on the networked systems' definition of the network topology at some level of abstraction. For example, a network diagram may represent the physical layer of the network, the electrical interconnections of the wiring, and another diagram may represent the IP layer, the technology underpinning most of today' s networks. In many conventional network management systems, the level that the network diagram represents is ill-defined, with each drawn link indicating only that there is at least one form of connection between the objects or nodes. Similarly, in the case of 3-D views, a red status indicator on a network link may indicate a wiring problem, a software error or overload condition in the IP layer, or some unspecified problem detected in some element of the network link. Such poorly specified user interfaces make it hard for the user to understand the structure of the network and to identify problems. Consequently, there is a need for a method and apparatus that presents a network diagram that more accurately illustrates the actual structure of the network and any of its complex, constituent connections.

US 5,958,012 relates to an arrangement for visualising the components of a computer network system as a three-dimensional environment. The computer network system can be viewed at different levels of detail, such as a world view, a map scene, a building scene and a network scene. Indicators are displayed to reflect the status of components such as network segments and subnetworks.

US 5,295,244 discloses a network management system in which a network can be displayed in a location view (in which, for example, the status of a network is indicated by an icon on a map) or a topological view (in which connections between network elements are shown). The location and topological views can be shown at various levels of detail. Connections between two components of the network are depicted by a single line in the topological view.

### Summary

In accordance with the present invention there is provided a method in accordance with claim 1, a computer readable medium in accordance with claim 12 and an apparatus in accordance with claim 13.

The objects, features and advantages of the disclosed method and system are readily apparent from the following description of the preferred embodiments when taken in connection with the accompanying drawings.

### Brief Description of the Drawings

For a more complete understanding of the disclosed system and the advantages thereof, reference is now made to the following description taken in conjunction with the accompanying drawings in which like reference numbers indicate like features and wherein:
Figure 1 illustrates a system according to a preferred embodiment of the present system;
Figure 2A illustrates a display of the representation of a networked computer system;
Figure 2B illustrates a display of the representation of a networked computer system according to a first embodiment of the present system;
Figure 2C illustrates a display of the representation of a networked computer system according to a second embodiment of the present system;
Figure 2D illustrates a display of the representation of a networked computer system according to a third embodiment of the present system;
Figure 3-4 are flow diagrams that show two stages of a preferred method practiced with the present system; and
Figure 5 illustrates a user interface control panel for selection of links according to a preferred embodiment of the present system.

### Detailed Description

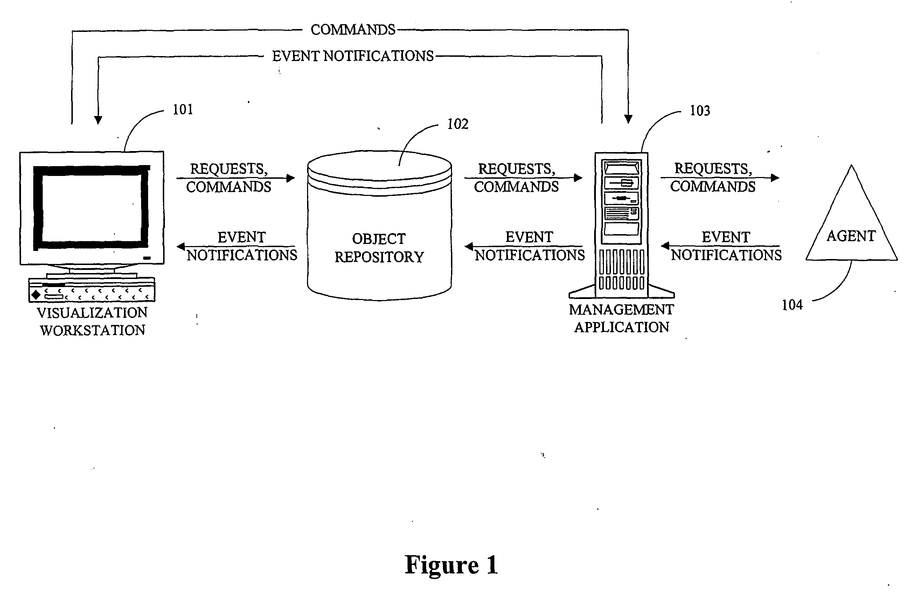

The various components that comprise a preferred embodiment of the disclosed network analysis system are shown in Figure 1. The system includes one or more of a visualization workstation 101, an object repository 102, one or more management applications 103, and one or more agents 104 associated with each such management application. The visualization workstation 101 interacts primarily with the object repository 102. Workstation 101 requests information from and sends commands to repository 102. Workstation 101 gets notification of events such as status change or object additions from repository 102.

The repository 102 in turn gets this information from the various management subsystems 103, which are fed by agents 104 associated with the managed systems. One architectural consideration of the present system is that in normal operation, the visualization workstation 101 preferably interacts with the object repository 102. This minimizes network traffic, optimizes the performance of the rendering of the workstation 101, and minimizes the interconnectivity between the visualization workstation 101 and the multitude of management subsystems and agents existing in practical networks.

Preferably, the management system is based on some type of store, preferably the object repository 102, that holds the description of the structure of the network. This can include the momentary state, load, and performance of the network and the systems. This store may or may not be persistent, it may be populated with a manual process, or with an automatic discovery utility.

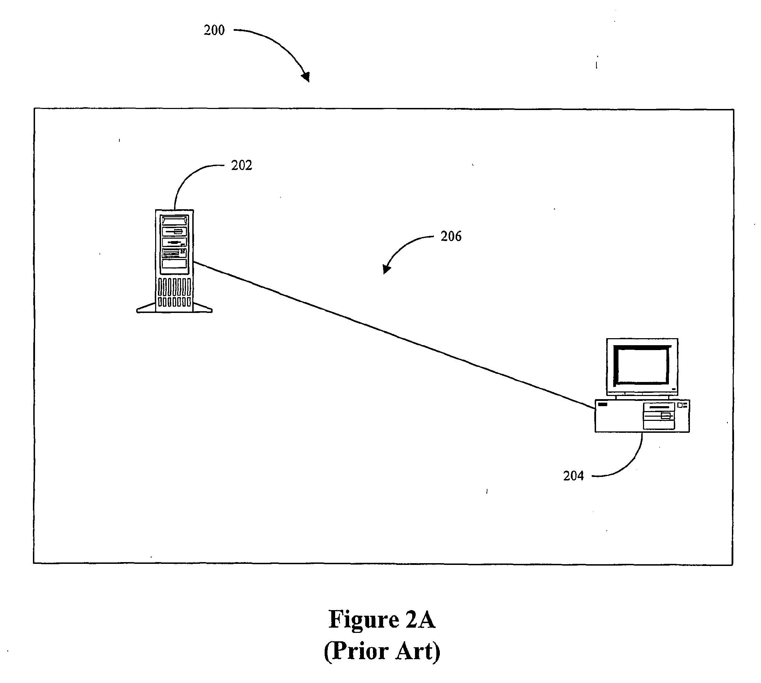

Turning now to Figure 2A, there is illustrated a typical network topology user display 200 showing the representation of a server 202 and a workstation 204 depicted visually as icons and stored as objects within repository 102. A link 206 connects server 202 and workstation 204 indicating at least one physical or logical relationship between the server and the workstation. Given the depiction of a single link 206 between the server 202 and the workstation 204, and the number of ways that server 202 and workstation 204 could be related, link 206 fails to provide meaningful information.

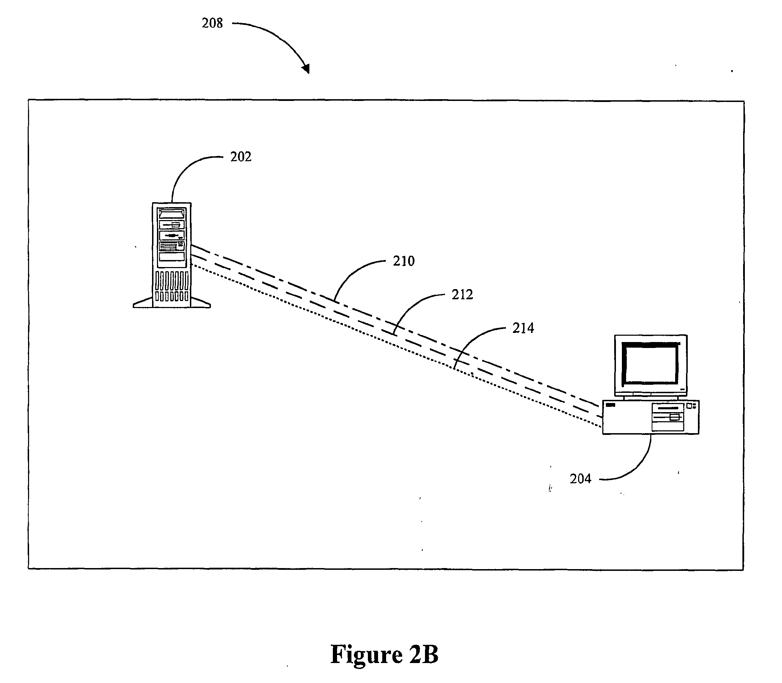

Turning now to Figure 2B, there is illustrated a preferred network topology user display 208 showing a more detailed connection between server 202 and workstation 204. User display 208 selectively depicts the network topology represented in repository 102. Display 208 provides additional information relating to the link between server 202 and workstation 204. Display 208 selectively presents the network topology according to a particular level of abstraction. In the case of display 208, individual links 210, 212 and 214 are depicted which represent the levels of an industry-standard "stack" representation of the network such as an Open System Interconnection ("OSI") stack, specifically the network 210, transport 212, and application 214 layers are depicted.

The network layer represents the services in the OSI protocol stack that provide internetworking for a communications session. The transport layer represents the services in the OSI protocol stack that provide end-to-end management of the communications session. The Application layer represents the software in the OSI protocol stack that provides the starting point of the communications session. Displaying separate links for specific layers of a stack enables the user to more accurately determine the state of the relationship between any two network nodes.

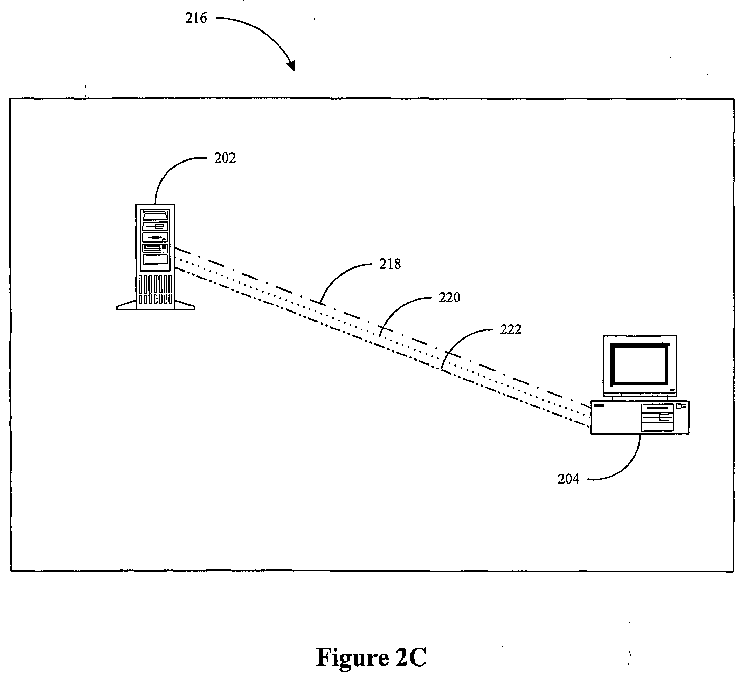

Turning now to Figure 2C, there is illustrated an alternate network topology user display 216 showing a more detailed connection between server 202 and workstation 204 according to a different level of abstraction. User display 216 selectively depicts the network topology represented in repository 102 by displaying individual links 218, 220 and 222: In this alternative embodiment, the individual links 218, 220 and 222 represent the specific protocols running on the various levels of the "stack" representation of the network, namely Internet Protocol ("IP"), Transmission Control Protocol ("TCP ") and File Transfer Protocol ("FTP"), respectively.

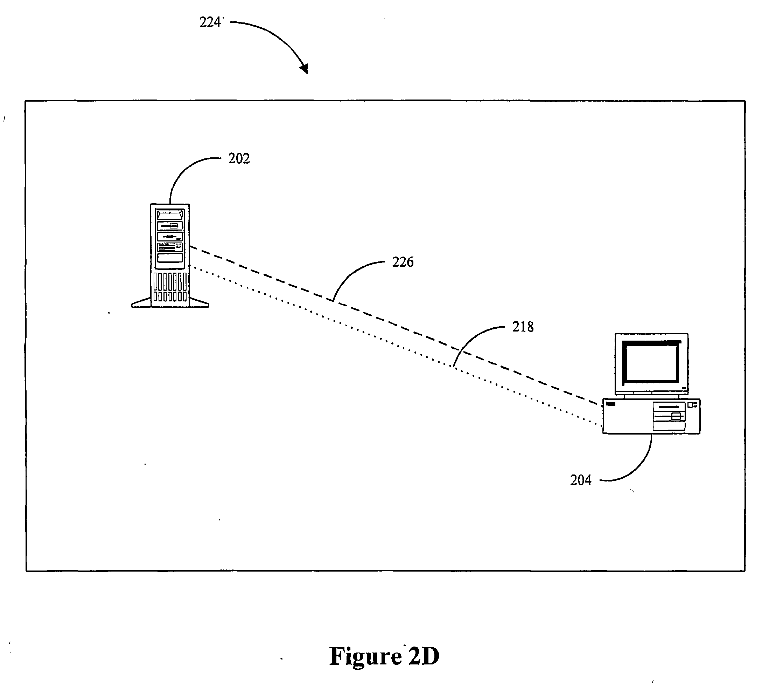

Turning now to Figure 2D, there is illustrated another alternate network topology user display 224 showing a detailed connection between server 202 and workstation 204 according to yet a different level of abstraction. User display 224 selectively depicts the network topology represented in repository 102 by displaying individual links 226 and 218. In this alternative embodiment, the individual links 226 and 218 represent the different types of specific protocols running on a particular layer. Links 226 and 218 represent Hypertext Transfer Protocol ("HTTP") and FTP, respectively, both of which run in the application layer.

Accordingly, the individual links between two network components may represent whatever abstraction layer is of interest to the user and the management applications, regardless of the logical definitions or relationships of such layers. Although the links of figures 2A-2D are depicted as various two-dimensional dotted, dashed and solid lines, this is only one way to implement the method. Of course, links of various colors, shapes, sizes, animations and dimensions could be used to convey information pertaining to any relationship between two network components.

In a preferred embodiment, the various links that.connect a specific pair of network components or objects in a user display are related in an order that reflects the foundation or containment hierarchy of the stack of abstraction layers. For example, the order of links displayed in Figure 2C indicates that FTP 218 runs on top of TCP 220 which runs on top of IP 222. In alternative preferred embodiments the various links that connect a specific pair of network components objects in a user display are related in a structure that indicates that they are at the same logical layer, for example Figure 2D indicates that FTP 218 and HTTP 226 are both in the application layer. In still other preferred embodiments, the various links that connect a specific pair of network components or objects in a user display are related in a structure that indicates dependencies among them. For example, a user display may provide a display that illustrates that both FTP and HTTP are dependent on TCP, and all three as well as LU 6.2 are dependent on a physical connection.

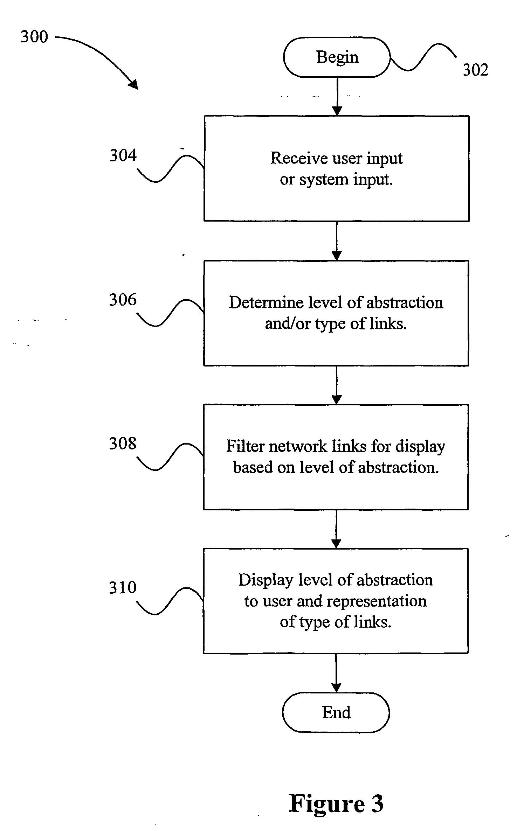

All of these variations can be controlled by the method 300 shown in Figure 3. After starting at step 302, an input or signal is received from the user or system at 304. The input is preferably a specific request to identify the level of abstraction or type of links or connections of interest to the user. Alternatively, the input could be other data such as a User ID or a System ID, for example, from which the system can determine the user's preferred links to display.

The method then determines or correlates a level of abstraction and/or a type of link at 306 based on the signal received at 304. After the determination or correlation is made at 306, the method filters the network links according to the level of abstraction at 308. The method then outputs a display for the user at 310 showing the level of abstraction and a representation of the type of links.

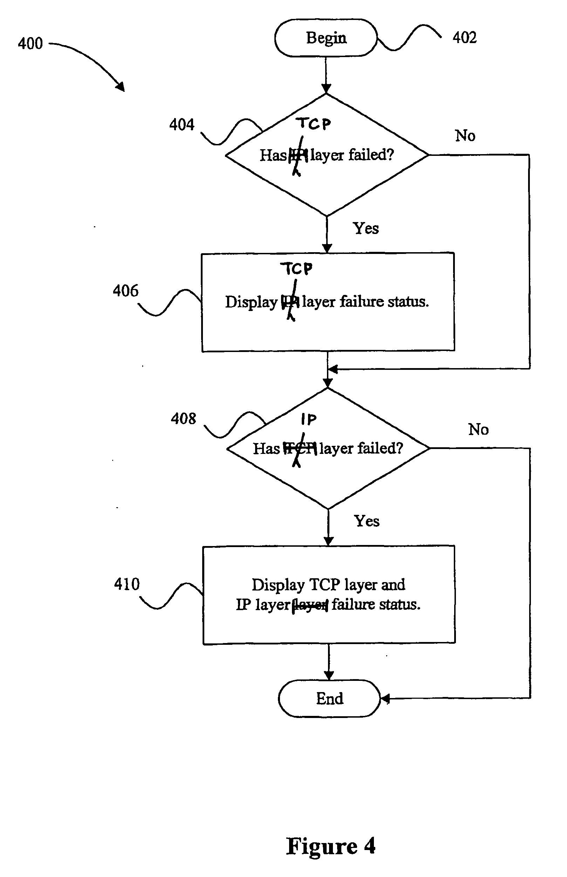

Turning to Figure 4, a flow chart 400 showing part of a method according to a preferred embodiment of the present system is shown. Preferably, the filtering of network links includes identifying any network link that would be of interest to the user regardless of the level of abstraction, such as a relevant propagated failure.

By way of example, a system may employ a propagation engine that propagates a state up along an inclusion hierarchy or along dependency relationships. The propagation engine operates independently for all the types of links, following all the inclusion and dependency relationships that are relevant for such a propagation engine.

The illustrated propagation engine will cause an TCP failure to be reflected in an IP link, even if only the IP link is selected to be displayed. The preferred method begins at 402 At 404, a failure in the TCP layer is tested. If the TCP layer has failed, a TCP failure status is displayed at 406. The propagation engine then proceeds to determine whether an IP layer failure has occurred at 408. This determination is necessary because the IP layer is considered to contain TCP. Consequently, a failure in the IP layer would affect both the TCP layer and the IP layer. At 408, if an IP layer failure has occurred, the propagation engine displays both an IP layer failure and a TCP layer failure at 410. Likewise, since TCP is dependent on IP to operate correctly, a failure in the IP layer should propagate to the TCP layer as well, making the system show a deduced failure status even if only the TCP layer is displayed.

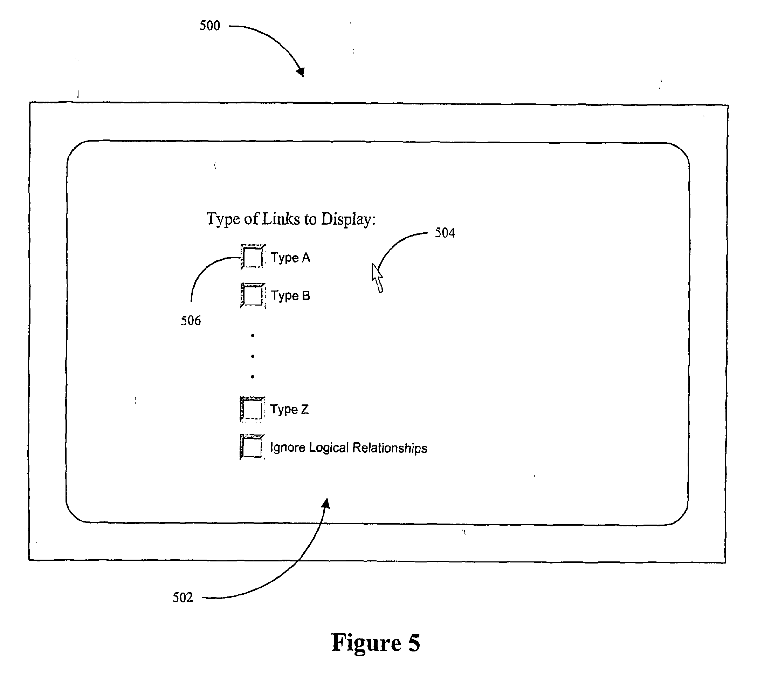

One configuration for a preferred user interface 500, which is preferably within display 200, provides a control panel 502, preferably similar to that shown in Figure 5, that allows the user to select which types of links are represented in the display. It is to be appreciated, alternative preferred embodiments include similar functioning user interfaces. The selection is preferably based partially on the method shown in Figure 3. This user interface 500, and associated software, reflects the logical relationships among the various types of links 206, illustrating the standard stack structure or some other structure that is of interest in the particular illustration. The user interface 500 permits the selection of several types of links 206 to be included, regardless of their logical relationships. This is done by allowing a user to point and click the cursor 504 over a box 506 indicating a particular type of link. It is to be appreciated, alternative preferred embodiments include other user control devices.

The user interface 500 preferably displays the state, load, and performance indicators for the selected layers only. The user interface 500 utilizes a "preferences" dialog technique, for selecting which types of indicators should be allowed to override the selected display type, based on type of link, importance of the link or end-nodes of the link, severity of state, urgency or risk of prediction, or other contextual indicator.

Other preferred systems can provide user interfaces that include other techniques for selecting what information should be displayed, filtering based on the class or importance of the object, severity of status, membership in business process, and other properties. In accordance with alternative preferred embodiments of the present system, the system cooperates with such context-based filtering, allowing the user to direct for, example, that the display should include only those systems and links that are part of order processing and handle IP traffic.

In summary, a preferred embodiment discloses a method and apparatus that allow for network analysis by a representation of the structure, state, load, or performance of the links and connections between components of a network by methods including using layered network diagrams. This representation is customizable allowing the user to easily and quickly select what aspect of the links comprising a network to view.

Accordingly, it is to be understood that the drawings and description in this disclosure are proffered to facilitate comprehension of the system, and should not be construed to limit the scope thereof. It should be understood that various changes, substitutions and alterations can be made without departing from the scope of the system.

## Claims

1. A method for analyzing links between components of a computer system, comprising:
receiving (304) input associated with a desired level of abstraction, **characterised in that** the level of abstraction is associated with two or more types of a connection between two components of the computer system;
determining (306) the level of abstraction based on the input;
filtering (308) network links (210, 212, 214, 218, 220, 222, 226) for display based on the level of abstraction; and
displaying (310) the filtered network links to present a layered network diagram (208, 216, 224), wherein the layered network diagram comprises a link for each of the two or more types of the connection associated with the level of abstraction.

2. The method of claim 1, wherein the input is a user identification.

3. The method of claim 1, wherein the level of abstraction is associated with at least one protocol.

4. The method of claim 1, wherein each displayed network link represents a layer of an industry standard stack.

5. The method of claim 4, wherein the layer of the industry standard stack is selected from the group consisting of the layers of an Open System Interconnection, OSI, protocol stack.

6. The method of claim 1, wherein each network link (210, 212, 214, 218, 220, 222, 226) represents a protocol.

7. The method of claim 6, wherein the protocol is selected from the group consisting of Internet Protocol, IP, Transmission Control Protocol, TCP, File Transfer Protocol, FTP and Hypertext Transfer Protocol, HTTP.

8. The method of claim 1, wherein filtering (308) includes identifying any network link that represents a relevant propagated failure regardless of the level of abstraction.

9. The method of claim 1, wherein displaying (310) includes displaying a three dimensional representation of the link.

10. The method of claim 1, wherein the displayed links (210, 212; 214, 218, 220, 222, 226) are related in an order that reflects a containment hierarchy.

11. The method of any one of the preceding claims, further comprising:
storing in an object repository, at least one object representing a link between components of a network;
receiving a request to present the network topology represented by the at least one object in the object repository; and wherein
the step of filtering (308) includes filtering the at least one object based on the level of abstraction, and
the step of displaying (310) includes displaying the at least one filtered object to present a layered network diagram.

12. A computer readable medium comprising instructions which, when executed by a suitable computer, cause the computer to perform the method of any one of the preceding claims.

13. An apparatus for analyzing links between components of a computer system, comprising:
a processor;
a memory connected to said processor storing a program to control the operation of said processor;
the processor operative with the program in the memory to:
receive input associated with a desired level of abstraction, **characterised in that** the level of abstraction is associated with two or more types of a connection between two components of the computer system;
determine the level of abstraction based on the input;
filter network links (210, 212, 214, 218, 220, 222, 226) for display based on the level of abstraction; and
display the filtered network links to present a layered network diagram (208, 216, 224), wherein the layered network diagram comprises a link for each of the two or more types of the connection associated with the level of abstraction.

14. The apparatus of claim 13, wherein the input is a user identification.

15. The apparatus of claim 13, wherein each displayed network link represents a layer of an industry standard stack.

16. The apparatus of claim 13, wherein each network link represents a protocol.

17. The apparatus of claim 13, wherein the processor is further operative to identify any network link that represents a relevant propagated failure regardless of the level of abstraction.

18. The apparatus of claim 13, wherein the displayed links (210, 212, 214, 218, 220, 222, 226) are related in an order that reflects a containment hierarchy.

19. The apparatus of any one of claims 13 to 18, wherein the processor is further operative to:
store in an object repository, at least one object representing a link between components of a network;
receive a request to present the network topology represented by the at least one object in the object repository;
filter the at least one object based on the level of abstraction; and
display the at least one filtered object to present a layered network diagram.

## Patentansprüche

1. Verfahren zum Analysieren von Verknüpfungen zwischen Komponenten eines Computersystems, umfassend:
Empfangen (304) einer Eingabe, die mit einer gewünschten Abstraktionsebene assoziiert ist, **dadurch gekennzeichnet, dass** die Abstraktionsebene mit zwei oder mehr Arten einer Verbindung zwischen zwei Komponenten des Computersystems assoziiert ist,
Bestimmen (306) der Abstraktionsebene auf Basis der Eingabe,
Filtern (308) von Netzverknüpfungen (210, 212, 214, 218, 220, 222, 226) zur Anzeige auf Basis der Abstraktionsebene, und
Anzeigen (310) der gefilterten Netzwerkverknüpfungen, um ein geschichtetes Netzwerkdiagramm (208, 216, 224) darzustellen, wobei das geschichtete Netzwerkdiagramm eine Verknüpfung für jede der zwei oder mehr Arten der mit der Abstraktionsebene assoziierten Verbindung umfasst.

2. Verfahren nach Anspruch 1, wobei die Eingabe eine Benutzerkennung ist.

3. Verfahren nach Anspruch 1, wobei die Abstraktionsebene mit mindestens einem Protokoll assoziiert ist.

4. Verfahren nach Anspruch 1, wobei jede angezeigte Netzwerkverknüpfung eine Schicht eines Industriestandard-Stacks darstellt.

5. Verfahren nach Anspruch 4, wobei die Schicht des Industriestandard-Stacks aus der Gruppe gewählt wird, die aus den Schichten des Protokoll-Stacks eines offenen Kommunikationssystems, englisch als Open System Interconnection, OSI, bezeichnet, besteht.

6. Verfahren nach Anspruch 1, wobei jede Netzwerkverknüpfung (210, 212, 214, 218, 220, 222, 226) ein Protokoll darstellt.

7. Verfahren nach Anspruch 6, wobei das Protokoll aus der Gruppe gewählt wird, die aus dem Internet-Protokoll, englisch als Internet Protocol, IP, bezeichnet, dem Protokoll der Transportschicht, englisch als Transmission Control Protocol, TCP, bezeichnet, dem Dateiübertragungsprotokoll, englisch als File Transfer Protocol, FTP, bezeichnet und dem Hypertext-Übertragungsprotokoll, englisch als Hypertext Transfer Protocol, HTTP, bezeichnet, besteht.

8. Verfahren nach Anspruch 1, wobei das Filtern (308) das Identifizieren einer Netzwerkverknüpfung aufweist, die einen relevanten verbreiteten Ausfall ohne Bezug auf die Abstraktionsebene darstellt.

9. Verfahren nach Anspruch 1, wobei das Anzeigen (310) die Anzeige einer dreidimensionalen Darstellung der Verknüpfung aufweist.

10. Verfahren nach Anspruch 1, wobei die angezeigten Verknüpfungen (210, 212, 214, 218, 220, 222, 226) in einer Folge zugeordnet sind, die eine Enthaltenseinhierarchie widerspiegelt.

11. Verfahren nach einem der vorhergehenden Ansprüche, ferner umfassend:
Speichern von mindestens einem Objekt, das eine Verknüpfung zwischen Komponenten eines Netzwerks darstellt, in einem Objektrepositorium,
Empfangen einer Anforderung, die Netzwerktopologie, die durch das mindestens eine Objekt dargestellt ist, im Objektrepositorium darzustellen, und wobei
der Schritt des Filterns (308) das Filtern des mindestens einen Objekts auf Basis der Abstraktionsebene aufweist, und
der Schritt des Anzeigens (310) die Anzeige des mindestens einen Objekts aufweist, um ein geschichtetes Netzwerkdiagramm darzustellen.

12. Computerlesbares Medium, umfassend Anweisungen, die, wenn sie durch einen geeigneten Computer ausgeführt werden, dafür sorgen, dass der Computer das Verfahren von einem der vorhergehenden Ansprüche ausführt.

13. Vorrichtung zum Analysieren von Verknüpfungen zwischen Komponenten eines Computersystems, umfassend:
einen Prozessor,
einen Speicher, der mit dem Prozessor verbunden ist, und der ein Programm zur Steuerung des Betriebs des Prozessors speichert,
wobei der Prozessor mit dem Programm in dem Speicher betreibbar ist, um:
eine Eingabe, die mit der gewünschten Abstraktionsebene assoziiert ist, zu empfangen, **dadurch gekennzeichnet, dass** die Abstraktionsebene mit zwei oder mehr Arten einer Verbindung zwischen zwei Komponenten des Computersystems assoziiert ist,
die Abstraktionsebene auf Basis der Eingabe zu bestimmen,
Netzwerkverknüpfungen (210, 212, 214, 218, 220, 222, 226) zur Anzeige auf Basis der Abstraktionsebene zu filtern, und
die gefilterten Netzwerkverknüpfungen anzuzeigen, um ein geschichtetes Netzwerkdiagramm (208, 216, 224) darzustellen, wobei das geschichtete Netzwerkdiagramm eine Verknüpfung für jede der zwei oder mehr Arten der mit der Abstraktionsebene assoziierten Verbindung umfasst.

14. Vorrichtung nach Anspruch 13, wobei die Eingabe eine Benutzerkennung ist.

15. Vorrichtung nach Anspruch 13, wobei jede angezeigte Netzwerkverknüpfung eine Schicht eines Industriestandard-Stacks darstellt.

16. Vorrichtung nach Anspruch 13, wobei jede Netzwerkverknüpfung ein Protokoll darstellt.

17. Vorrichtung nach Anspruch 13, wobei der Prozessor ferner betreibbar ist, um eine Netzwerkverknüpfung zu identifizieren, die einen relevanten verbreiteten Ausfall ohne Rücksicht auf die Abstraktionsebene darstellt.

18. Vorrichtung nach Anspruch 13, wobei die angezeigten Verknüpfungen (210, 212, 214, 218, 220, 222, 226) in einer Folge zugeordnet sind, die die Enthaltenseinhierarchie widerspiegelt.

19. Vorrichtung nach einem der Ansprüche 13 bis 18, wobei der Prozessor ferner betreibbar ist, um:
in einem Objektrepositorium mindestens ein Objekt, das eine Verknüpfung zwischen Komponenten eines Netzwerks darstellt, zu speichern,
eine Anforderung, die Netzwerktopologie, welche durch das mindestens eine Objekt im Objektrepositorium dargestellt ist, darzustellen,
das mindestens eine Objekt auf Basis der Abstraktionsebene zu filtern, und
das mindestens eine gefilterte Objekt anzuzeigen, um ein geschichtetes Netzwerkdiagramm darzustellen.

## Revendications

1. Procédé pour analyser des liaisons entre des éléments d'un système informatique, comprenant:
la réception (304) d'une entrée associée à un niveau d'abstraction souhaité, **caractérisé en ce que** le niveau d'abstraction est associé à une connexion de deux types au moins entre deux éléments du système informatique;
déterminer (306) le niveau d'abstraction en fonction de l'entrée;
filtrer (308) des liaisons de réseau (210, 212, 214, 218, 220, 222, 226) pour les afficher en fonction du niveau d'abstraction; et
afficher (310) les liaisons de réseau filtrées pour présenter un diagramme de réseau en couches (208, 216, 224), le diagramme de réseau en couches comprenant une liaison pour chacun des deux types au moins de la connexion associée au niveau d'abstraction.

2. Procédé selon la revendication 1, dans lequel l'entrée est une identification d'utilisateur.

3. Procédé selon la revendication 1, dans lequel le niveau d'abstraction est associé à au moins un protocole.

4. Procédé selon la revendication 1, dans lequel chaque liaison de réseau affichée représente une couche d'une pile de normes industrielles.

5. Procédé selon la revendication 4, dans lequel la couche de la pile de normes industrielles est choisie dans le groupe constitué par les couches d'une pile de protocoles d'interconnexion de systèmes ouverts, OSI.

6. Procédé selon la revendication 1, dans lequel chaque liaison de réseau (210, 212, 214, 218, 220, 222, 226) représente un protocole.

7. Procédé selon la revendication 6, dans lequel le protocole est choisi dans le groupe constitué par le protocole Internet, IP, le protocole de contrôle de transmission, TCP, le protocole de transfert de fichiers, FTP, et le protocole de transfert de documents hypertextuels, HTTP.

8. Procédé selon la revendication 1, dans lequel le filtrage (308) comprend l'identification d'une quelconque liaison de réseau représentant une défaillance propagée correspondante indépendamment du niveau d'abstraction.

9. Procédé selon la revendication 1, dans lequel l'affichage (310) comprend l'affichage d'une représentation en trois dimensions de la liaison.

10. Procédé selon la revendication 1, dans lequel les liaisons affichées (210, 212, 214, 218, 220, 222, 226) sont liées dans un ordre qui reflète une hiérarchie d'inclusion.

11. Procédé selon l'une quelconque des revendications précédentes, comprenant également:
le stockage, dans un entrepôt d'objets, d'au moins un objet représentant une liaison entre des éléments d'un réseau;
la réception d'une demande de présentation de la topologie de réseau représentée par le ou les objets stockés dans l'entrepôt d'objets; et dans lequel
l'étape de filtrage (308) comprend le filtrage du ou des objets en fonction du niveau d'abstraction, et
l'étape d'affichage (310) comprend l'affichage du ou des objets filtrés pour présenter un diagramme de réseau en couches.

12. Support lisible par ordinateur comprenant des instructions qui, lorsqu'elles sont exécutées par un ordinateur approprié, amènent l'ordinateur à mettre en oeuvre le procédé selon l'une quelconque des revendications précédentes.

13. Appareil pour analyser des liaisons entre des éléments d'un système informatique, comprenant:
un processeur;
une mémoire reliée audit processeur et stockant un programme pour commander le fonctionnement dudit processeur;
le processeur étant apte à agir avec le programme stocké dans la mémoire pour:
recevoir une entrée associée à un niveau d'abstraction souhaité, **caractérisé en ce que** le niveau d'abstraction est associé à une connexion de deux types au moins entre deux éléments du système informatique;
déterminer le niveau d'abstraction en fonction de l'entrée;
filtrer des liaisons de réseau (210, 212, 214, 218, 220, 222, 226) pour les afficher en fonction du niveau d'abstraction; et
afficher les liaisons de réseau filtrées pour présenter un diagramme de réseau en couches (208, 216, 224), le diagramme de réseau en couches comprenant une liaison pour chacun des deux types au moins de la connexion associée au niveau d'abstraction.

14. Appareil selon la revendication 13, dans lequel l'entrée est une identification d'utilisateur.

15. Appareil selon la revendication 13, dans lequel chaque liaison de réseau affichée représente une couche d'une pile de normes industrielles.

16. Appareil selon la revendication 13, dans lequel chaque liaison de réseau représente un protocole.

17. Appareil selon la revendication 13, dans lequel le processeur est également apte à agir pour identifier une quelconque liaison de réseau représentant une défaillance propagée correspondante indépendamment du niveau d'abstraction.

18. Appareil selon la revendication 13, dans lequel les liaisons affichées (210, 212, 214, 218, 220, 222, 226) sont liées dans un ordre qui reflète une hiérarchie d'inclusion.

19. Appareil selon l'une quelconque des revendications 13 à 18, dans lequel le processeur est également apte à agir pour:
stocker dans un entrepôt d'objets au moins un objet représentant une liaison entre des éléments d'un réseau;
recevoir une demande de présentation de la topologie de réseau représentée par le ou les objets stockés dans l'entrepôt d'objets;
filtrer le ou les objets en fonction du niveau d'abstraction; et
afficher le ou les objets filtrés pour présenter un diagramme de réseau en couches.
